# EUROPEAN PATENT SPECIFICATION

(11) **EP 1 606 857 B1**
(45) Date of publication and mention of the grant of the patent: **16.05.2007**
(21) Application number: 04721859.9
(22) Date of filing: 19.03.2004
(51) Int. Cl.: H01R 13/52, H02G 15/013, H02G 3/08

(54) **CONSTRUCTIONAL UNIT AND METHOD FOR THE PRODUCTION THEREOF**
KONSTRUKTIONSEINHEIT UND VERFAHREN ZU IHRER HERSTELLUNG
UNITE DE CONSTRUCTION ET PROCEDE DE PRODUCTION DE CETTE UNITE

(30) Priority: 21.03.2003 DE 10313833
(43) Date of publication of application: 21.12.2005
(73) Proprietor: TYCO ELECTRONICS PRETEMA GMBH & CO. KG, 75223 Niefern-Öschelbronn (DE)
(72) Inventor: BERCHTOLD, Lorenz, 90425 Nürnberg (DE); KURZEJA, Dietmar, 76316 Malsch (DE)
(74) Representative: Lindner, Michael
(86) International application number: PCT/EP2004/002865
(87) International publication number: WO 2004/084358

(56) References cited:
- WO-A-93/21676
- DE-A- 10 044 460
- US-A- 3 757 276
- US-A- 5 829 867

## Description

The invention relates to a constructional unit having a passageway for receiving a cable and a sealing element that creates a seal between the constructional unit and the passageway according to the preamble of claim 1. The invention further relates to a method for producing the same according to the preamble of claim 11.

Such a constructional unit and method are described in DE 100 44 460.

Many sectors of technology require cables to be guided from one region to another through a passageway in a constructional unit. It is often desirable that the passageway is sealed to prevent fluids, gases, etc. from passing through the passageway from one region to the other along the cable. For example, in the sector of electrical engineering an electrical or mechatronic component, such as a cable connector with externally located plug-in elements, is provided in a passageway of an insulative housing. Because the plug-in elements are used to make electrical connections with the electrical component, a seal is provided in a region of the passageway, particularly around the plug-in elements, to protect the electrical component from, for example, dirt if the housing is positioned in an engine area of a vehicle or oil if the housing is positioned in an oil sump of an engine.

One of the methods used to seal the passageway includes injecting a plastic material that corresponds to a material of the housing around the plug-in elements. This type of seal, however, often leaks as a result of de-lamination, contraction of the plastic material, or as a result of a rough textured surface, such as with a blanked plug-in contact. To improve the seal, an exit face of the plug-in elements could additionally be sealed after the plastic material has been injected around the plug-in elements. A subsequent treatment step of this kind, however, is complicated and cost-intensive. A non-blanked contact could also be used so that a smooth textured surface is provided for adhesion of the plastic material, however, non-blanked contacts are difficult and costly to produce. Additionally, a round contact pin could be inserted through the housing. This solution, however, is costly because it requires sealing connecting points between the pin and an adjacent conductor path.

Another method used to seal the passageway includes injection moulding two different thermoplastic materials into the passageway to create a seal. This type of seal, however, is unsatisfactory in that a quality seal is not created between the thermoplastic material and the metal of the plug-in elements. Additionally, if one of the thermoplastic materials is replaced with a non-reactive hot-melt adhesive and the other thermoplastic material is injected around it, the sealing quality of the boundary layer between the thermoplastic material and the hot-melt adhesive is still unstable because the hot-melt adhesive has little dimensional stability when exposed to large changes in temperature.

It is also known to pre-assembly the plug-in elements with elastic seals before inserting the plug-in elements into the housing. Still further possibilities include drive fit or profile packing. These solutions, however, require additional assembly steps and additional personnel, which allows room for more errors. Additionally, because the housing and the seal have different coefficients of thermal expansion, over time gaps can form between the housing and the seal. Furthermore, formation of the seal is costly, not only due to the required geometry of the seal but also due to the required surface quality of the sealing face. These types of seals also require complicated sealing tests following assembly and are subject to wear that necessitates replacements of the seal, further increasing production costs.

The Applicant has addressed the previously mentioned problems with a method described in DE 100 44 460. In this method, a material is injected around the sealing element, which is preferably a reactive polymer mix, when the sealing element is in a non-hardened state to produce the housing. This method leads to a considerable improvement in the sealing properties between the sealing element and the housing. Although this method has proved advantageous in practice, however, the desire for simplified handling still remains.

It is therefore an object of the present invention is to develop a constructional unit that can be produced in a few steps and has a simple and economical seal, particularly between the sealing element and the housing.

The above-mentioned problems are solved by a constructional unit according to claim 1 and a method according to claim 11.

This and other objects are achieved by a constructional unit having a housing made of a first material. A cable passes through the housing. A sealing element, made of a second material, is arranged between the cable and the housing. The first material is a plastic material and the second material is a hot-melt adhesive with a modulus of transverse elasticity of less than 500 N/mm² at 0 degrees Celsius and a dimensional stability under heat of HDT B (ISO 75-2) greater than 230 degrees Celsius.

The invention will now be described in greater detail with reference to the accompanying drawings, wherein:
Fig. 1a is a schematic view of a constructional unit according to the invention.
Fig. 1b is a sectional view of the constructional unit of Fig. 1a.
Fig. 2a is a perspective view of a plug-in contact during a first stage of manufacture.
Fig. 2b is a perspective view of the plug-in contact during a second stage of manufacture.
Fig. 2c is a perspective view of the plug-in contact during a third stage of manufacture.
Fig. 3 is a sectional view of the plug-in contact of Fig. 2.

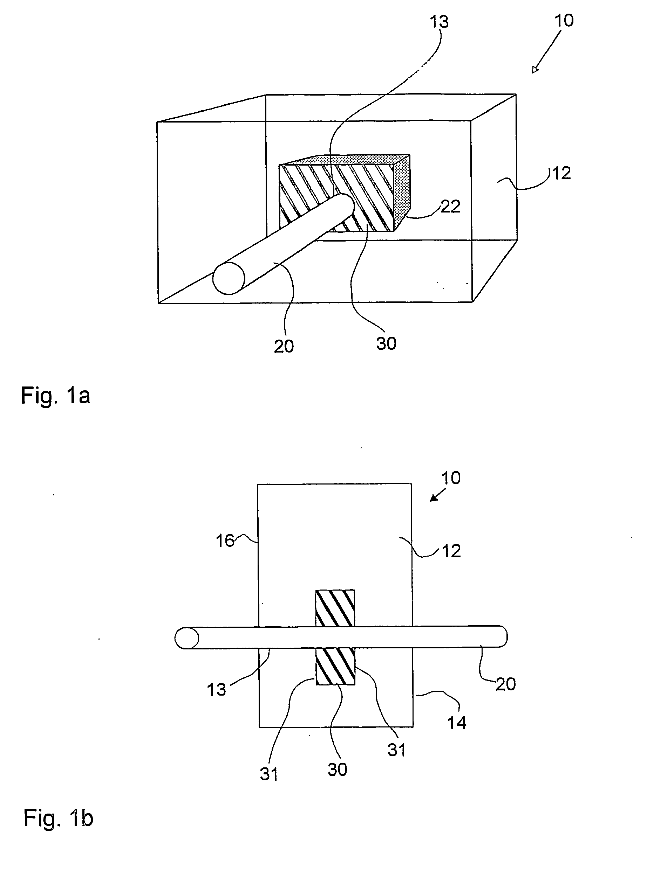

Fig. 1 shows a constructional unit 10. The constructional unit 10 is not to be limited by the illustrated example, but represents any of a plurality of different constructional elements, which all have substantially the same structure. For example, the constructional unit 10 may be an electric plug, an electrical unit arranged in a housing, a closing cylinder of a motor vehicle arranged in an insulative housing, etc.

As shown in Fig. 1, the constructional unit 10 includes a housing 12. The housing 12 may be, for example, part of the constructional unit 10 or form the constructional unit 10 itself. The housing 12 may be formed from a thermoplastic, such as Polyoxymethylene (POM), Polybutylene Terephthalate (PBT), Poly-Butyl Acrylate (PBA), which are advantageous in respect to their properties, their processability and their costs, or any other material that exhibits dimensional stability, such as duroplastic materials. A passageway 13 extends through the housing 12. The passageway 13 corresponds to a cross-section of a cable 20, to be described later, and may any geometric configuration that enables the cable 20 to be passed through the constructional unit 10.

The cable 20 is understood to be any element that is to be guided from one side of the constructional unit 10 through the passageway 13 to the other side of the constructional unit 10. The cable 20 may be, for example, a flexible sheathed cable, electrical plug-in elements, pipecables, such as coolant pipes, or closing cylinders. Alternatively, the cable 20 may be an electric conductor path with a rectangular cross-section. The material, length, and cross-sectional geometry of the cable 20 are unimportant with respect to the invention.

A sealing element 30 communicates with the passageway 13. Although the sealing element 30 is illustrated as being substantially rectangular in shape, the sealing element 30 may have any desired shape. The sealing element 30 may be made from a reactive fully cross-linked hot-melt adhesive, such as a PA based hot-melt adhesive, which has good adhesive properties, particularly to metal, such that the sealing element 30 is capable of adhering to a surface of the cable 20 and the housing 12 to create a seal therewith. The sealing element 30 has a high dimensional stability under heat HDT B (ISO 75-2) of at least 230 degree Celsius and a modulus of transverse elasticity of preferably less than 200 N/mm² at 0 degrees Celsius. The value of the modulus of transverse elasticity may also be greater than 200 N/mm² at 0 degrees Celsius, however, the quality of the adhesive and sealing properties will be slightly lowered. The sealing element 30 is formed to substantially enclose the cable 20 along a longitudinal portion 22 and along a periphery while adhering to an inner face of the passageway 13 so that the passageway 13 is sealed from a front side 16 of the housing 12 to the rear side 14 of the housing 12. The passageway 13 is formed as being closed both towards the rear side 14 and the front side 16 of the housing 12, i.e., a face of the housing 12 rests against a front face 31 of the sealing element 30 facing the rear side 14 and the front side 16. The sealing element 30 is thereby protected from external influences.

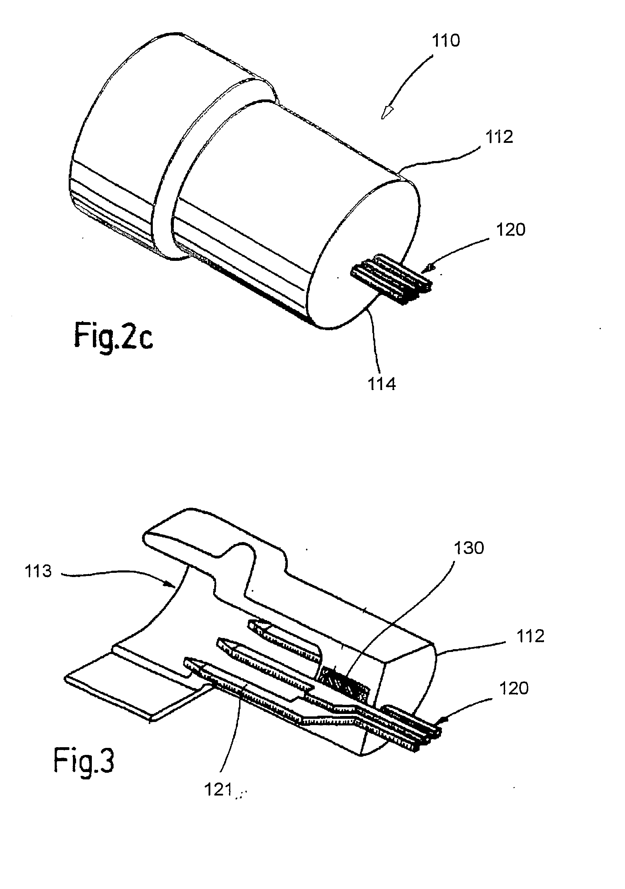

The method for producing a constructional unit 10 formed as a plug 110 will now be described in greater detail. As shown in Figs. 2c and 3, the plug 110 has a housing 112 with a passageway 113. Plug-in contacts 120 are arranged inside the passageway 113 and extend from a rear side 114 of the plug 110.

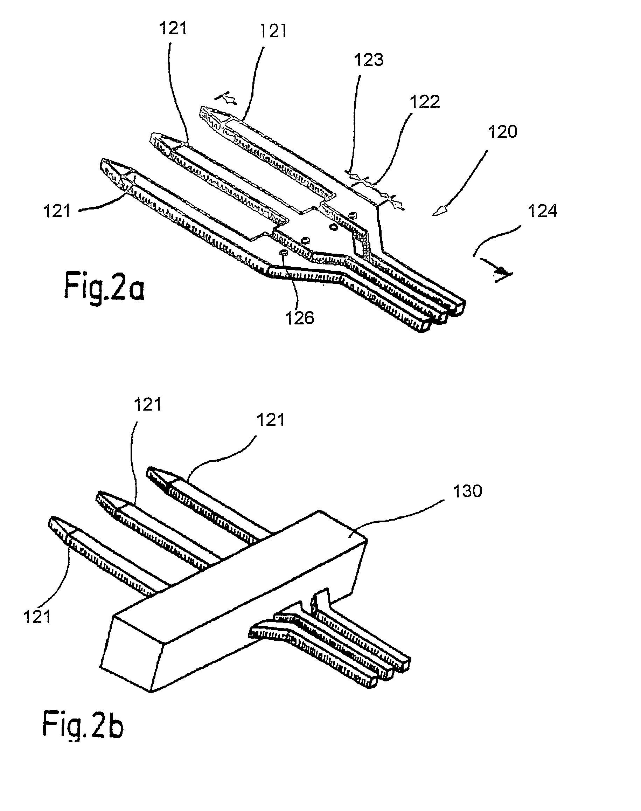

As shown in Figure 2a, the plug-in contacts 120 have three elongated conductor paths 121. The conductor paths 121 are blanked-out of an electrically conductive material, for example, copper. The elongated conductor paths 121 have a first longitudinal portion or plug-in portion 123, a second longitudinal portion or sealing portion 122, and a third longitudinal portion or connecting element 124. The conductor paths 121 are aligned such that they extend parallel to one another in an area of a plug-in portion 123 and a connecting portion 124. The distance from the conductor paths 121 is greater in the plug-in portion 123 than in the connecting portion 124. The central sealing portion 122 of the conductor paths 121 has an enlarged surface provided with apertures 126. The enlarged surface may be used for attaching electrical elements, such as capacitors.

As shown in Fig. 2b, the aligned conductor paths 121 are then injected or enveloped in a region of the sealing portion 122 with a hot-melt adhesive to form a sealing element 130 by placing the conductor paths 121 in a cavity. Because the sealing element 130 is formed by well-known injection moulding methods, the method of forming the sealing element 130 will not be described in greater detail. Alternatively, other well-known methods may also be used to form the sealing member 130. The hot-melt adhesive, as previously described, may be a reactive hot-melt adhesive with a modulus of transverse elasticity less than 200 N/mm² at 0 degrees Celsius, based on a PA material. The sealing element 130 completely surrounds the sealing portion 122 of each conductor path 121 and covers an entire peripheral face thereof. The enlarged surface of the conductor paths 121 in the sealing portion 122 ensure firm adhesion of the sealing element 130 to the conductor paths 121 such that the sealing element 130 is prevented from tilting or rotating. The apertures 126 additionally ensure a firm adhesion in a longitudinal direction.

Once the material of the sealing element 130 has completely hardened or fully cross-linked, the plug-in contacts 120 are placed in another cavity in order to form the housing 112. The housing 112 is also formed by injection moulding. Alternatively, other well-known methods may also be used to form the housing 12, for example, injecting or dispensing the thermoplastic material thereon. The cavity is such that it is possible to inject completely around the sealing element 130. Because the sealing element 130 is already fully cross-linked when it is injected, the material of the sealing element 130 has a high dimensional stability under heat and hardly any deformations result on the surface of the sealing element 30. Additionally, the sealing element 130 is prevented from deforming when the hot thermoplastic material is injected thereon. The high elasticity of the sealing element 130 maintains the seal in the contact region of the sealing element 130 and the housing 112, even where there are large variations in temperature, such as down to -40 degrees Celsius.

As shown in Fig. 3, once the thermoplastic material used to form the housing 112 has solidified, the plug 110 is complete, and a jack may be plugged into the plug portion 123 inside the passageway 113 of the housing 112 to create an electrical connection.

With the aid of this method it is possible to maintain a constructional unit 10, 110 with a sealing element 30, 130 of high sealing quality, wherein the method steps can be carried out simply and economically. In particular conventional injection moulding methods can be used. The advantage of this method compared with the earlier one cited in the above-mentioned patent application is that the sealing element 30, 130 itself can be handled, in particular also intermediately stored, so manufacturing of the entire constructional unit 10, 110 can be made more flexible. This method also enables very economical and simple manufacture, because plants that already exist for the manufacture of constructional units can continue to be used without problems. The method according to the invention thus requires no change in the existing technology and enables it to be converted within a short time. In particular only small investments are necessary.

A constructional unit 10, 110 of this kind has the advantage that excellent permanent sealing properties are achieved, particularly due to the elasticity of the sealing material 30, 130. A further advantage can be seen in that the sealing element 30, 130 can be used for virtually any sealing geometry. The shape of the sealing element 30,130 is fixed solely by the process of attaching, so the form of the seal causes no restriction of any kind related to the geometry. The constructional unit 10, 110 can therefore be a self-contained housing for accommodating a mechatronic component or a plug connector provided with contacts, which can be attached to a housing, a frame, or a plug.

## Claims

1. A constructional unit having a housing (12) made of a first material, at least one cable (20) extending through the housing (12), and a sealing element (30) made of a second material arranged between the cable (20) and the housing (12), **characterized in that** the first material is a plastic material and the second material is a hot-melt adhesive with a modulus of transverse elasticity of less than 500 N/mm² at 0 degrees Celsius and having a dimensional stability under heat HDT B (ISO 75-2) greater than 230 degrees Celsius.

2. The constructional unit according to claim 1, **characterised in that** the second material is a hot-melt adhesive with a modulus of transverse elasticity of less than 200 N/mm².

3. The constructional unit according to one of the preceding claims, **characterised in that** the hot-melt adhesive is a reactively cross-linking two-component hot-melt adhesive.

4. The constructional unit according to one of claims 1 to 3, **characterised in that** the hot-melt adhesive is a material based on PU.

5. The constructional unit according to claim 1 or 2, **characterised in that** the hot-melt adhesive is a moisture-cross-linking one-component material.

6. The constructional unit according to one of claims 1 to 3, **characterised in that** the hot-melt adhesive is a material based on PA.

7. The constructional unit according to one of the preceding claims, **characterised in that** the first material is Polyoxymethylene, Polybutylene Terephthalate, or Poly-Butyl Acrylate.

8. The constructional unit according to one of the preceding claims, **characterised in that** the housing accommodates an electrical or mechatronic component.

9. The constructional unit according to claim 8, **characterised in that** the component is surrounded by the sealing element (30), the housing (12) surrounds the sealing element (30), and the cable (20) penetrates into the housing (12) from an outside of the housing (12) and extends as far as the component.

10. The constructional unit according to claim 8 or 9, **characterised in that** the cable (20) is constructed as an electrical, fluid and/or heat-conducting cable.

11. A method for producing a constructional unit, preferably according to one of claims 1 to 10, having a housing (12) made of a first material, a cable (20) penetrating into the housing or passing through it, and a sealing element (30) made of a second material arranged between the cable (20) and the housing (12), **characterised by** the steps of:
applying the second material to a portion of the cable (20) along the entire periphery of the cable (20) in order to maintain the sealing element (30), the second material being a hot-melt adhesive, the modulus of transverse elasticity of which is less than 500 N/mm² at 0 degrees Celsius, and having a dimensional stability under heat HDT B(ISO 75-2) greater than 230 degrees Celsius and
injecting the first material around the sealing element (30) after it has hardened, in order to maintain the housing (12).

12. The method according to claim 11, **characterised in that** the hot-melt adhesive has a modulus of transverse elasticity of less than 200 N/mm².

13. The method according to claim 11 or 12, **characterised in that** the hot-melt adhesive has a dimensional stability under heat HDT B (ISO 75-2) greater than 230 degrees Celsius.

14. The method according to one of claims 11 to 13, **characterised in that** the hot-melt adhesive is a material based on PU.

15. The method according to one of claims 11 to 13, **characterised in that** the hot-melt adhesive is a moisture-cross-linking one-component material.

16. The method according to one of claims 11 to 13, **characterised in that** the hot-melt adhesive consists of a material based on PA.

## Patentansprüche

1. Konstruktionseinheit mit einem Gehäuse (12) aus einem ersten Material, mindestens einem Kabel (20), das sich durch das Gehäuse (12) erstreckt, und einem Dichtungselement (30) aus einem zweiten Material, das zwischen dem Kabel (20) und dem Gehäuse (12) angeordnet ist, **dadurch gekennzeichnet, dass** das erste Material ein Kunststoffmaterial und das zweite Material ein Schmelzklebstoff mit einem Querelastizitätsmodul von weniger als 500 N/mm² bei 0 Grad Celsius ist und eine Dimensionsstabilität unter Wärme HDT B (ISO 75-2) von mehr als 230 Grad Celsius aufweist.

2. Konstruktionseinheit nach Anspruch 1, **dadurch gekennzeichnet, dass** das zweite Material ein Schmelzklebstoff mit einem Querelastizitätsmodul von weniger als 200 N/mm² ist.

3. Konstruktionseinheit nach einem der vorhergehenden Ansprüche, **dadurch gekennzeichnet, dass** der Schmelzklebstoff ein reaktionsfähig vernetzender Zweikomponentenschmelzklebstoff ist.

4. Konstruktionseinheit nach einem der Ansprüche 1 bis 3, **dadurch gekennzeichnet, dass** der Schmelzklebstoff ein Material auf der Basis von PU ist.

5. Konstruktionseinheit nach Anspruch 1 oder 2, **dadurch gekennzeichnet, dass** der Schmelzklebstoff ein feuchtigkeitsvernetzendes Einkomponentenmaterial ist.

6. Konstruktionseinheit nach einem der Ansprüche 1 bis 3, **dadurch gekennzeichnet, dass** der Schmelzklebstoff ein Material auf der Basis von PA ist.

7. Konstruktionseinheit nach einem der vorhergehenden Ansprüche, **dadurch gekennzeichnet, dass** das erste Material Polyoxymethylen, Polybutylenterephthalat oder Poly-Butyl-Acrylat ist.

8. Konstruktionseinheit nach einem der vorhergehenden Ansprüche, **dadurch gekennzeichnet, dass** das Gehäuse ein elektrisches oder mechatronisches Bauteil aufnimmt.

9. Konstruktionseinheit nach Anspruch 8, **dadurch gekennzeichnet, dass** das Bauteil durch das Dichtungselement (30) umgeben wird, das Gehäuse (12) das Dichtungselement (30) umgibt und das Kabel (20) in das Gehäuse (12) von einer Außenseite des Gehäuses (12) eindringt und sich so weit wie das Bauteil erstreckt.

10. Konstruktionseinheit nach Anspruch 8 oder 9, **dadurch gekennzeichnet, dass** das Kabel (20) als ein elektrisches, fluid- und/oder wärmeleitendes Kabel konstruiert ist.

11. Verfahren zur Herstellung einer Konstruktionseinheit, vorzugsweise nach einem der Ansprüche 1 bis 10, mit einem Gehäuse (12) aus einem ersten Material, einem Kabel (20), das in das Gehäuse eindringt oder durch dieses hindurchgeht, und einem Dichtungselement (30) aus einem zweiten Material, das zwischen dem Kabel (20) und dem Gehäuse (12) angeordnet ist, **gekennzeichnet durch** die folgenden Schritte:
Aufbringen des zweiten Materials auf einen Abschnitt des Kabels (20) längs des gesamten Umfanges des Kabels (20), um das Dichtungselement (30) zu halten, wobei das zweite Material ein Schmelzklebstoff ist, dessen Querelastizitätsmodul kleiner ist als 500 N/mm² bei 0 Grad Celsius, und das eine Dimensionsstabilität unter Wärme HDT B (ISO 75-2) von mehr als 230 Grad Celsius aufweist; und
Spritzen des ersten Materials um das Dichtungselement (30), nachdem es ausgehärtet ist, um das Gehäuse (12) zu erhalten.

12. Verfahren nach Anspruch 11, **dadurch gekennzeichnet, dass** der Schmelzklebstoff einen Querelastizitätsmodul von weniger als 200 N/mm² aufweist.

13. Verfahren nach Anspruch 11 oder 12, **dadurch gekennzeichnet, dass** der Schmelzklebstoff eine Dimensionsstabilität unter Wärme HDT B (ISO 75-2) von mehr als 230 Grad Celsius aufweist.

14. Verfahren nach einem der Ansprüche 11 bis 13, **dadurch gekennzeichnet, dass** der Schmelzklebstoff ein Material auf der Basis von PU ist.

15. Verfahren nach einem der Ansprüche 11 bis 13, **dadurch gekennzeichnet, dass** der Schmelzklebstoff ein feuchtigkeitsvernetzendes Einkomponentenmaterial ist.

16. Verfahren nach einem der Ansprüche 11 bis 13, **dadurch gekennzeichnet, dass** der Schmelzklebstoff aus einem Material auf der Basis von PA besteht.

## Revendications

1. Unité de construction, comportant un boîtier (12) composé d'un premier matériau, au moins un câble (20) s'étendant à travers le boîtier (12), et un élément d'étanchéité (30) composé d'un deuxième matériau agencé entre le câble (20) et le boîtier (12), **caractérisé en ce que** le premier matériau est un matériau plastique, le deuxième matériau étant un adhésif thermofusible ayant un module d'élasticité transversale de moins de 500 N/mm² à 0 degré Celsius et ayant une stabilité dimensionnelle à chaud HDT B(ISO 75-2) supérieure à 230 degrés Celsius.

2. Unité de construction selon la revendication 1, **caractérisée en ce que** le deuxième matériau est un adhésif thermofusible ayant un module d'élasticité transversale inférieur à 200 N/mm².

3. Unité de construction selon l'une des revendications précédentes, **caractérisée en ce que** l'adhésif thermofusible est un adhésif thermofusible à réticulation réactive à deux composants.

4. Unité de construction selon l'une des revendications 1 à 3, **caractérisée en ce que** l'adhésif thermofusible est un matériau à base de PU.

5. Unité de construction selon les revendications 1 ou 2, **caractérisée en ce que** l'adhésif thermofusible est un matériau à un composant à réticulation au mouillé.

6. Unité de construction selon l'une des revendications 1 à 3, **caractérisée en ce que** l'adhésif thermofusible est un matériau à base de PA.

7. Unité de construction selon l'une des revendications précédentes, **caractérisée en ce que** le premier matériau est du polyoxyméthylène, du téréphtalate de polybutylène, ou du polyacrylate de butyle.

8. Unité de construction selon l'une des revendications précédentes, **caractérisée en ce que** le boîtier reçoit un composant électrique ou mécatronique.

9. Unité de construction selon la revendication 8, **caractérisée en ce que** le composant est entouré par l'élément d'étanchéité (30), le boîtier (12) entourant l'élément d'étanchéité (30) et le câble (20) pénétrant dans le boîtier (12) à partir de l'extérieur du boîtier (12) et s'étendant sur la même distance que le composant.

10. Unité de construction selon les revendications 8 ou 9, **caractérisée en ce que** le câble (20) est construit sous forme d'un câble électrique, conducteur d'un fluide et/ou de chaleur.

11. Procédé de production d'une unité de construction, de préférence selon l'une des revendications 1 à 10, comportant un boîtier (12) composé d'un premier matériau, un câble (20) pénétrant dans le boîtier ou le traversant, et un élément d'étanchéité (30) composé d'un deuxième matériau agencé entre le câble (20) et le boîtier (12), **caractérisé par** les étapes ci-dessous:
application du deuxième matériau sur une partie du câble (20), le long de l'ensemble de la périphérie du câble (20) pour maintenir l'élément d'étanchéité (30), le deuxième matériau étant un adhésif thermofusible, ayant un module d'élasticité transversale inférieur à 500 N/mm² à 0 degré Celsius et ayant une stabilité dimensionnelle à chaud HDT B (ISO 75-2) supérieure à 230 degrés Celsius; et
injection du premier matériau autour de l'élément d'étanchéité (30) après son durcissement, afin de maintenir le boîtier (12).

12. Procédé selon la revendication 11, **caractérisé en ce que** l'adhésif thermofusible a un module d'élasticité transversale inférieur à 200 N/mm².

13. Procédé selon les revendications 11 ou 12, **caractérisé en ce que** l'adhésif thermofusible a une stabilité dimensionnelle à chaud HDT B (ISO 75-2) supérieure à 230 degrés Celsius.

14. Procédé selon l'une des revendications 11 à 13, **caractérisé en ce que** l'adhésif thermofusible est un matériau à base de PU.

15. Procédé selon l'une des revendications 11 à 13, **caractérisé en ce que** l'adhésif thermofusible est un matériau à un composant à réticulation au mouillé.

16. Procédé selon l'une des revendications 11 à 13, **caractérisé en ce que** l'adhésif thermofusible est constitué par un matériau à base de PA.
